# EUROPEAN PATENT APPLICATION

(11) **EP 2 477 391 A1**
(43) Date of publication of application: **18.07.2012**
(21) Application number: 11151153.1
(22) Date of filing: 17.01.2011
(51) Int. Cl.: H04N 5/33, H04N 5/232, G01N 25/00

(54) **Thermographic augmented reality display in an electronic device**

(71) Applicant: Research In Motion Limited, Waterloo, ON N2L 3W8 (CA)
(72) Inventor: Hirsch, Alexander Samson, Rolling Meadows, IL 60008 (US)
(74) Representative: Fennell, Gareth Charles

(57) **Abstract**

An electronic device is configured to capture thermal information of objects and subjects in real-time utilizing a camera or infrared sensors or utilizing a camera and infrared sensors. The electronic device comprises a display which can depict thermal or temperature information regarding objects or subjects overlaid or layered on image data of objects or subjects. Displayed temperature or thermal information can include numeric information corresponding to discrete or bounded or partially bounded areas of objects or subjects. Thermal information or temperature information can be combined with augmented-reality applications in an electronic device and shared with other electronic devices via one or more networks.

## Description

### FIELD OF THE TECHNOLOGY

The present disclosure relates generally to electronic devices. More specifically, enabling implementations relate to electronic devices having radiation sensitive receptors and configured to display discrete temperature information relating to physical objects. The technology provides means and methods whereby a camera assembly in an electronic device may be utilized under certain conditions to collect radiative data from objects or subjects and to present temperature information pertaining to objects or subjects in an augmented reality view. In some implementations of the technology, temperature information or temperature data, or thermal information or thermal data, or thermographic information or thermographic data, can be combined with other augmented reality information, for example time information, or geographic information, or time information and geographic information. Augmented reality information comprises a live direct or indirect view of a physical real-world environment, elements of which are augmented by virtual computer-generated sensory input such as sound or graphics. In some implementations of the technology, thermal information or thermal data can be transmitted to other electronic devices.

### BRIEF DESCRIPTION OF THE DRAWINGS

FIG. 1 illustrates a communication system including an electronic device to which example implementations of the technology can be applied.

FIG. 2 illustrates a block diagram of an electronic device within the technology.

Fig. 3 illustrates an electronic device displaying a temperature data of an object.

FIG. 4 illustrates an electronic device displaying temperature data of an object.

FIG. 5 illustrates an electronic device displaying temperature data of a subject.

FIG. 6. illustrates an electronic device displaying temperature data of a subject.

Fig. 7 illustrates an implementation of a rear view of an electronic device within the technology.

FIG. 8. illustrates an electronic device displaying temperature information of an object.

FIG. 9. illustrates the steps in a method within the technology.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

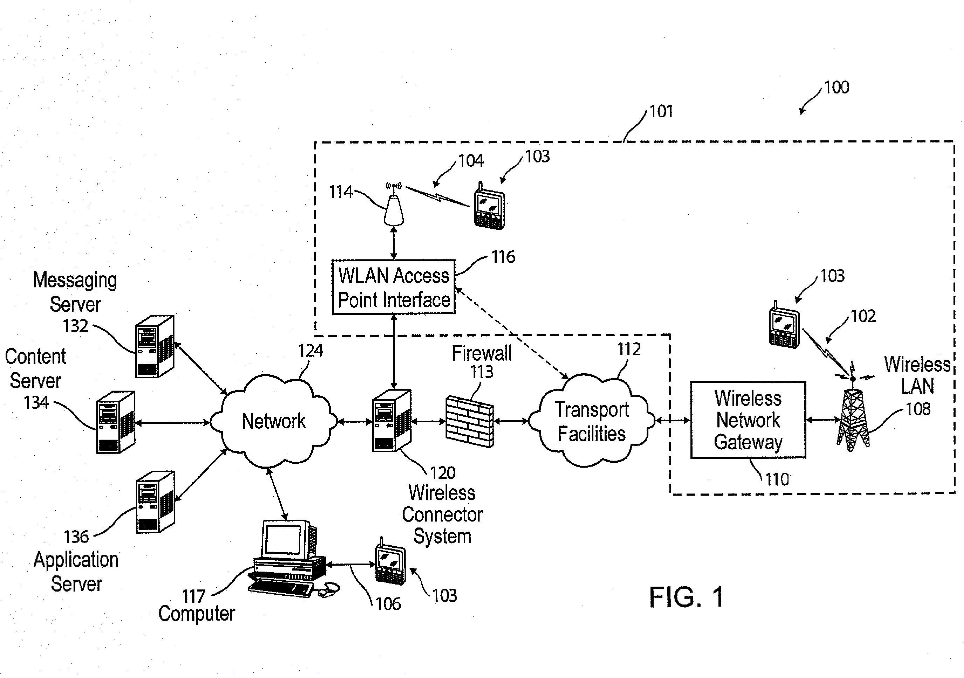

In order to facilitate an understanding of environments in which example implementations described herein can operate, reference is made to FIG. 1, which shows, in block diagram form, a communication system **100** in which implementations of the technology can be applied. The communication system **100** may comprise a number of electronic devices **103** that may be connected to the remainder of system **100** in any of several different ways. Accordingly, several instances of electronic devices **103** are depicted in FIG. 1 employing different example ways of connecting to system **100.**

The figures in this application illustrate example of implementations within the technology. Additional elements and modifications may be necessary to make the electronic device, e.g., **103** operable in particular network environments. While in the illustrated implementations, the communication devices, e.g., **103** may comprise smart phones, in other implementations, the electronic devices may comprise personal digital assistants (PDA), tablet computers, laptop computers, desktop computers, servers, or other electronic devices capable of sending and receiving electronic messages.

Electronic devices **103** are connected to a wireless network **101** that may comprise one or more of a Wireless Wide Area Network (WWAN) **102** and a Wireless Local Area Network (WLAN) **104** or other suitable network arrangements. In some implementations, the electronic devices **103** are configured to communicate over both the WWAN **102** and WLAN **104**, and to roam between these networks. In some implementations, the wireless network **101** may comprise multiple WWANs **102** and WLANs **104.**

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the electronic devices **103.** In some implementations, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the electronic devices **103** to transport facilities **112,** and through the transport facilities **112** to a wireless connector system **120.** Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet), and its resources, or the wireless connector system **120** may be operated by a mobile network provider. In some implementations, the network **124** may be realized using the Internet rather than, or in addition to, an internal or enterprise network.

The wireless network gateway **110** provides an interface between the wireless connector system **120** and the WWAN **102,** which facilitates communication between the electronic devices **103** and other devices (not shown) connected, directly or indirectly, to the WWAN **102.** Accordingly, communications sent via the electronic devices **103** are transported via the WWAN **102** and the wireless network gateway **110** through transport facilities **112** to the wireless connector system **120.** Communications sent from the wireless connector system **120** are received by the wireless network gateway **110** and transported via the WWAN **102** to the electronic devices **103.**

The WLAN **104** comprises a wireless network that, in some implementations, conforms to IEEE 802.11x standards (sometimes referred to as Wi-Fi TM) such as, for example, the IEEE 802.11a, 802.11b and/or 802.11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120,** such as a virtual private network (VPN), may be used). The AP interface **116** provides translation and routing services between the access points **114** and the wireless connector system **120** to facilitate communication, directly or indirectly, with the wireless connector system **120.**

The wireless connector system **120** may be implemented as one or more servers, and is typically located behind a firewall **113.** The wireless connector system **120** manages communications, including email, Hypertext Transfer Protocol (HTTP), and HTTP Secure (HTTPS) communications to and from a set of managed electronic devices **103.** The wireless connector system **120** also provides administrative control and management capabilities over users and electronic devices **103** that might connect to the wireless connector system **120.**

The wireless connector system **120** allows the electronic devices **103** to access the network **124** and connected resources and services such as a messaging server **132** (for example, a Microsoft Exchange Server®, TBM Lotus Domino®, or Novell GroupWise^{TM} email server), a content server **134** for providing content such as Internet content or content from an organization's internal servers, application servers **136** for implementing server-based applications such as instant messaging (IM) applications to electronic devices **103,** and intranet file services.

The wireless connector system **120** typically provides a secure exchange of data (e.g., email messages, personal information manager (PIM) data, and IM data) with the electronic devices **103.** In some implementations, communications between the wireless connector system **120** and the electronic devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the electronic device **103,** and can typically be regenerated by the user on electronic devices **103.** Data sent to the electronic devices **103** is encrypted by the wireless connector system **120** using the private encryption key retrieved from the user's mailbox. The encrypted data, when received on the electronic devices **103,** is decrypted using the private encryption key stored in memory. Similarly, data sent to the wireless connector system **120** from the electronic devices **103** is encrypted using the private encryption key stored in the memory of the electronic device **103.** The encrypted data, when received on the wireless connector system **120,** is decrypted using the private encryption key retrieved from the user's mailbox.

The wireless network gateway **110** is adapted to send data packets received from the electronic device **103** over the WWAN **102** to the wireless connector system **120**. The wireless connector system **120** then sends the data packets to the appropriate connection point such as the messaging server **132** or content servers **134** or application server **136.** Conversely, the wireless connector system **120** sends data packets received, for example, from the messaging server **132** or content servers **134** or application servers **136** to the wireless network gateway **110** that then transmit the data packets to the destination electronic device **103.** The AP interfaces **116** of the WLAN **104** provide similar sending functions between the electronic device **103,** the wireless connector system **120** and network connection point such as the messaging server **132,** content server **134** and application server **136.**

The network **124** may comprise a private local area network, metropolitan area network, wide area network, the public Internet or combinations thereof and may include virtual networks constructed using any of these, alone, or in combination. An electronic device **103** may alternatively connect to the wireless connector system **120** using a computer **117,** such as desktop or notebook computer, via the network **124.** A link **106** may be provided for exchanging information between the electronic device **103** and a computer **117** connected to the wireless connector system **120.** The link **106** may comprise one or both of a physical interface and short-range wireless communication interface. The physical interface may comprise one or combinations of an Ethernet connection, Universal Serial Bus (USB) connection, Firewire^{TM} (also known as an IEEE 1394 interface) connection, or other serial data connection, via respective ports or interfaces of the electronic device **103** and computer **117.** The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the electronic devices **103.** Suitable variations of the communication system are intended to fall within the scope of the present disclosure.

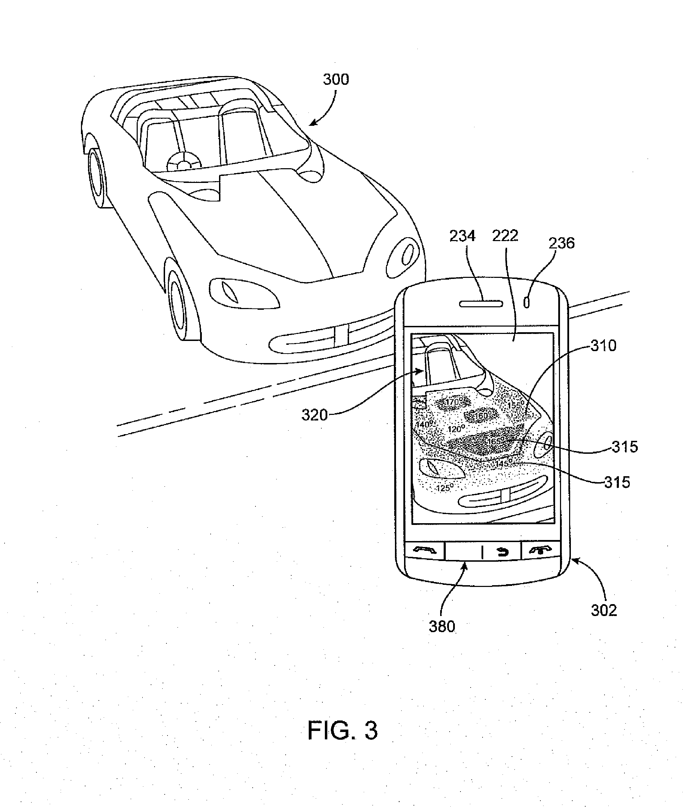

As will be appreciated from FIG. 3, an example electronic device **302** (as an example of **103**) comprises a display **222** which can be located above a keyboard **232** (not shown) constituting a user input means that is suitable for accommodating textual input to the device **302**. In some implementations, the keyboard **232** can be part of a touch screen display **222**. The front face of the device **302** has a navigation row **380.** As shown, the device **302** is of uni-body construction, also known as a "candy-bar" design.

The device **302** may include an auxiliary input that acts as a cursor navigation tool and that may be also exteriorly located upon the front face of the device **302.** The front face location of a cursor navigation tool allows the tool to be thumb-actuable, e.g., like the keys of the keyboard **232.** Some implementations of the technology provide the navigation tool in the form of a trackball (not shown) that may be utilized to instruct two-dimensional screen cursor movement in substantially any direction, as well as act as an actuator when the trackball is depressed like a button. Other implementations can provide the navigation tool in the form of a trackpad, a touchpad, a pointing stick, joystick, graphics tablet, or combinations thereof. The placement of the navigation tool can be above the keyboard **232** and below the display **222**; here, it may avoid interference during keyboarding and does not block the operator's view of the display **222** during use.

The device **302** may be configured to send and receive messages. The device **302** includes a body that can, in some implementations, be configured to be held in one hand by an operator of the device **302** during text entry. A display **222** is included that is located on a front face of the body and upon which information is displayed to the operator, e.g., during text entry. As will be described in further detail below, information can include temperature information of objects and subjects. The device **302** may also be configured to send and receive voice communications such as mobile telephone calls. The device **302** also can include a camera **221** to allow the device **302** to take electronic photographs that can be referred to as photos or pictures or image data. A camera can also be utilized to receive thermal information of objects. The device **302** can include an audio recorder that can be incorporated into a microphone or can be separated from a microphone **236.** The microphone can be used to receive audio data in conjunction with image or thermographic data collected by one or more sensors relating to an object or a subject. Further, the device **302** can be configured to operate a web browser.

The device **302** may further contain other sensors, e.g., proximity sensor, behind a cover mounted in an aperture defined in body of the electronic device **302.** In devices where substantially all the front face of the device is a touch screen, a portion of the touch screen can constitute the cover.

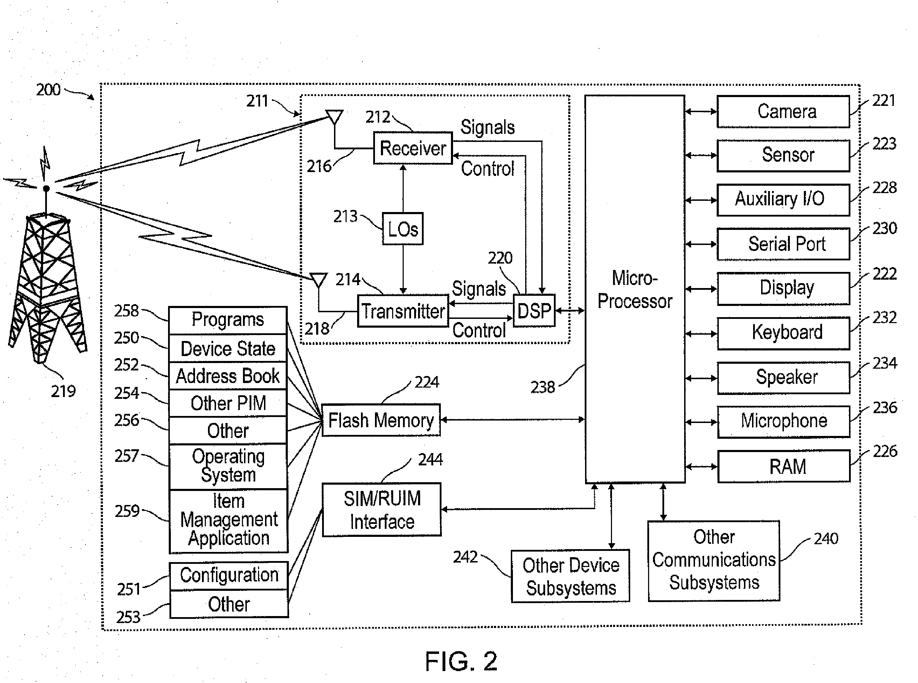

Referring to FIG. 2, a block diagram of a an electronic device, such as **302** and **103,** in accordance with an exemplary implementation is illustrated. As shown, the device **302** includes a processor **238** that controls the operation of the electronic device **302.** A communication subsystem **211** performs communication transmission and reception with the wireless network **219.** The microprocessor **238** further can be communicatively coupled with an auxiliary input/output (I/O) subsystem **228.** In at least one implementation, the processor **238** can be communicatively coupled to a serial port (for example, a Universal Serial Bus port) **230** that can allow for communication with other devices or systems via the serial port **230.** A display **222** can be communicatively coupled to processor **238** to allow for display of information to an operator of the electronic device **302.** When the electronic device **302** is equipped with a keyboard **232,** the keyboard can also be communicatively coupled with the processor **238.** The electronic device **302** can include a speaker **234,** a microphone **236,** random access memory (RAM) 226, and flash memory **224,** all of which may be communicatively coupled to the processor **238.** Other similar components may be provided on the electronic device **302** as well and optionally communicatively coupled to the processor **238.** Other communication subsystems **240** and other device subsystems **242** are generally indicated as being functionally connected with the processor **238** as well. An example of a communication subsystem **240** is a short range communication system such as BLUETOOTH® communication module or a WI-FI® communication module (a communication module in compliance with IEEE 802.11b) and associated circuits and components. Examples of other device subsystem **242** include a sensor and implementations of the present technology.

Additionally, the processor **238** is able to perform operating system functions and enables execution of programs on the electronic device **302.** In some implementations not all of the above components are included in the electronic device **302.** For example, in at least one implementation, the keyboard **232** is not provided as a separate component and is instead integrated with a touch screen as described below.

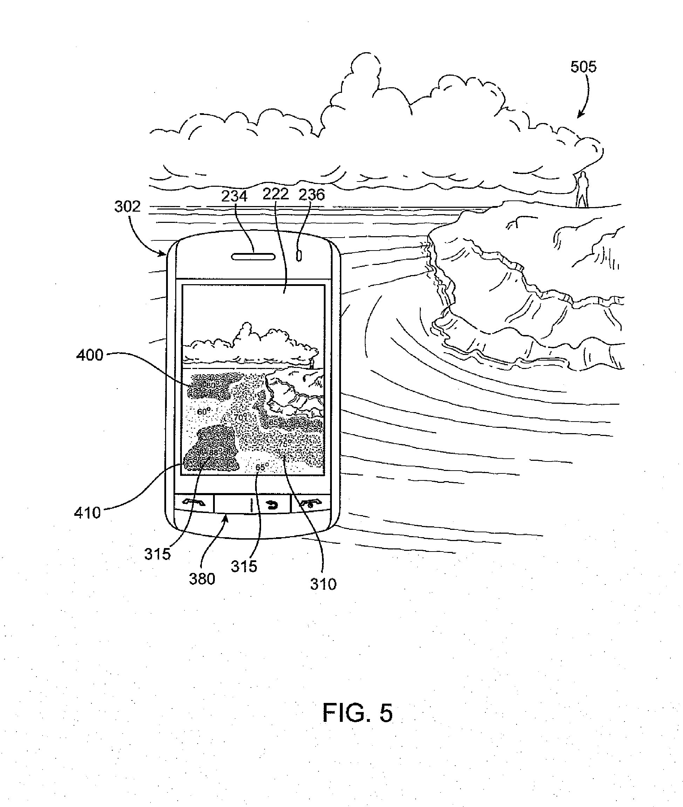

The auxiliary I/O subsystem **228** can take the form of a variety of different navigation tools (multi-directional or single-directional) such as a trackball navigation tool **521,** as illustrated in the exemplary implementation shown in FIG. 5, or a thumbwheel, a navigation pad, a joystick, touch-sensitive interface, or other I/O interface. These navigation tools may be located on the front surface of the electronic device **302** or may be located on any exterior surface of the electronic device **302.** Other auxiliary I/O subsystems may include external display devices and externally connected keyboards (not shown). While the above examples have been provided in relation to the auxiliary I/O subsystem **228,** other subsystems capable of providing input or receiving output from the electronic device **302** are considered within the scope of this disclosure. Additionally, other keys may be placed along the side of the electronic device **302** to function as escape keys, volume control keys, scrolling keys, power switches, or user programmable keys, and may likewise be programmed accordingly.

The keyboard **232** can include a plurality of keys that can be of a physical nature such as actuable buttons, or the actuable buttons can be of a software nature, typically constituted by representations of physical keys on a display **222** (referred to herein as "virtual keys"). It is also contemplated that the user input can be provided as a combination of the two types of keys. Each key of the plurality of keys is associated with at least one action that can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display **222,** which in one implementation is enabled by touching the display **222,** for example, with a stylus, finger, finger tip, finger nail, or other pointer, to generate the character or activate the indicated command or function. Some examples of displays **222** capable of detecting a touch include resistive, capacitive, projected capacitive, infrared and surface acoustic wave (SAW) touch screens.

Physical and virtual keys can be combined in many different ways as appreciated by those skilled in the art. In one implementation, not shown, physical and virtual keys are combined such that the plurality of enabled keys for a particular program or feature of the electronic device **302** is shown on the display **222** in the same configuration as the physical keys. Using this configuration, the operator can select the appropriate physical key corresponding to what is shown on the display **222.** Thus, the desired character, command or function is obtained by depressing the physical key corresponding to the character, command or function displayed at a corresponding position on the display **222,** rather than touching the display **222.**

Furthermore, the electronic device **302** is equipped with components to enable operation of various programs, as shown in FIG. 2. Programs can be implemented for receiving radiation in the infrared range from an object, determining a thermogram from the received radiation, receiving information regard emissivity of the object, calculating or estimating temperature as a function of received radiation, as a function of the thermogram, and the received information regarding emissivity of the object, and for displaying on the display **222** a numerical representation of the calculated temperature as a layer on a visual depiction of the an object or a subject. In an example implementation, the flash memory **224** is enabled to provide a storage location for the operating system **257,** device programs **258,** and data. The operating system **257** is generally configured to manage other programs **258** that are also stored in memory **224** and executable on the processor **238.** The operating system **257** honors requests for services made by programs **258** through predefined program interfaces. More specifically, the operating system **257** typically determines the order in which multiple programs **258** are executed on the processor **238** and the execution time allotted for each program **258,** manages the sharing of memory **224** among multiple programs **258,** handles input and output to and from other device subsystems **242,** and so on. In addition, operators typically can interact directly with the operating system **257** through a user interface usually including the keyboard **232** and display **222.** While in an exemplary implementation the operating system **257** is stored in flash memory **224,** the operating system **257** in other implementations is stored in read-only memory (ROM) or similar storage element (not shown). As those skilled in the art will appreciate, the operating system **257,** device program **258,** or parts thereof, may be loaded in RAM **226** or other volatile memory.

In some implementations, the flash memory **224** may contain programs **258** for execution on the device **302,** including - but not limited to - an address book **252,** a personal information manager (PIM) **254,** and a device state **250.** Furthermore, programs **258,** such as social software, and other information **256** including data can be segregated upon storage in the flash memory **224** of the device **302.**

When the electronic device **302** is enabled for two-way communication within the wireless communication network **219** (e.g., **108**), it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-T9), Ultra Mobile Broadband (UMB) networks, Worldwide Interoperability for Microwave Access (WiMAX), and other networks that can be used for data and voice, or just data or voice. For the systems listed above, the electronic device **302** may use a unique identifier to enable the electronic device **302** to transmit and receive signals from the communication network **219.** Other systems may not use such identifying information. GPRS, UMTS, and EDGE use a Subscriber Identity Module (SIM) in order to allow communication with the communication network **219.** Likewise, most CDMA systems use a Removable User Identity Module (RUIM) in order to communicate with the CDMA network. The RUIM and SIM card can be used in multiple different electronic devices **302.** An electronic device **302** can be configured to operate some features without a SIM/RUIM card, but an electronic device will not necessarily be able to communicate with the network **219.** A SIM/RUIM interface **244** located within the electronic device **302** allows for removal or insertion of a SIM/RUIM card (not shown). The SIM/RUIM card features memory and holds key configurations **251,** and other information **253** such as identification and subscriber related information. With a properly enabled electronic device **302,** two-way communication between the electronic device **302** and communication network **219** is possible.

If the electronic device **302** is enabled as described above or the communication network **219** does not use such enablement, the two-way communication enabled electronic device **302** is able to both transmit and receive information from the communication network **219**. The transfer of communication can be from the electronic device **302** or to the electronic device **302.** In order to communicate with the communication network **219,** the device **302** can be equipped with an integral or internal antenna **218** for transmitting signals to the communication network **219.** Likewise the device **302** can be equipped with another antenna **216** for receiving communication from the communication network **219.** These antennae (**216, 218**) in another exemplary implementation are combined into a single antenna (not shown). As one skilled in the art would appreciate, the antenna or antennae (**216, 218**) in another implementation can be externally mounted on the electronic device **302**.

When equipped for two-way communication, the electronic device **302** features a communication subsystem **211.** As is understood in the art, a communication subsystem **211** is modified so that a communication subsystem can support the operational needs of an electronic device **302.** The subsystem **211** includes a transmitter **214** and receiver **212** including the associated antenna or antennae (**216, 218**) as described above, local oscillators (LOs) **213,** and a processing module that in the presently described exemplary implementation is a digital signal processor (DSP) **220.**

It is contemplated that communication by the electronic device **302** with the wireless network **219** can be any type of communication that both the wireless network **219** and electronic device **302** are enabled to transmit, receive and process. In general, these can be classified as voice or data, or both voice and data. Voice communication generally refers to communication in which signals for audible sounds are transmitted by the electronic device **302** through the communication network **219.** Data generally refers to all other types of communication that the electronic device **302** is capable of performing within the constraints of the wireless network **219.**

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the electronic device **302** is enhanced when connectable within a communication system, and when connectable on a wireless basis in a network **219** in which voice, text messaging, and other data transfer are accommodated. An example real time system wherein operations occur in real time is disclosed in U.S. Patent No. 5,125,091. U.S. Patent No. is fully incorporated by reference herein. An electronic device **302** can include programs such as a web browser, a file browser, and client programs for interacting with server programs. Devices, e.g., **103, 302,** for use in the technology can be characterized by an identification number assigned to the device. Such identification numbers cannot be changed and are locked to each device.

Implementations of the technology receive and display information pertaining to infrared light. Infrared (IR) light is electromagnetic radiation with a wavelength between 0.7 and 300 micrometres, with a corresponding frequency range between approximately 1 and 430 THz (terahertz). IR wavelengths are longer than those of visible light, but shorter are shorter than those of terahertz radiation microwaves. Light from the sun provides an irradiance of over 1 kilowatt per square meter at sea level. Of this energy, 527 watts is infrared radiation, 445 watts is visible light, and 32 watts is ultraviolet radiation.

People at normal body temperature radiate chiefly at wavelengths near 12µm (micrometers). Objects generally emit infrared radiation across a spectrum of wavelengths, but only a specific region of the spectrum is of interest because sensors **223** can be designed only to collect radiation within a specific bandwidth. As a result, the infrared band can be subdivided into smaller sections. Near-infrared ("NIR") light has a wavelength of 0.7 to 1.0 µm. Some image intensifiers are sensitive to this area of the light spectrum. Examples can include night vision devices such as night vision goggles.

Short-wavelength infrared light ("SWIR") has a wavelength of 1.0 to 3 µm.

Mid-wavelength infrared light ("MWIR"), also known as intermediate infrared, has a wavelength of 3 to 5 µm.

Long-wavelength infrared light ("LWIR") 8 to 12 µm. This is the "thermal imaging" region, in which sensors **223** can obtain a completely passive picture of the outside world, including objects and subjects, based on thermal emissions only and requiring no external light or thermal source such as the sun, moon, infrared illuminator or flash **700.**

Very-long wave infrared ("VLWIR") has a wavelength of 12 to 30 µm. Near infrared is the region closest in wavelength to the radiation detectable by the human eye, mid and far infrared are progressively further from the visible spectrum. The onset of infrared is defined (according to different standards) at various values typically between 700 nm and 800 nm.

Emissivity is relevant to the infrared emissions of objects. Emmisivity is a property of a surface which describes how its thermal emissions deviate from the ideal of a black body. Thus, two objects at the same physical temperature will not appear to have the same temperature in an infrared image if they have differing emissivities. Thus, in order to obtain an accurate thermogram within the technology, emissivity of an object or subject is received by one or more sensors **223** comprised by an electronic device **302.** Within the technology, it can be beneficial to maintain a datastore in one or memories (e.g. **224**) relating each of a plurality of material descriptions of objects **300** or subjects to the emissivity of the described material. Within the technology, a device can be configured to present a list of the material descriptions, receive input selecting a material description and assign the emissivity related to the material description as the emissivity of the object **300.**

In order to operate as a noncontact temperature receptor, the camera **221** can change the value assigned to temperature of the object **300** being viewed with its emissivity setting. Other algorithms can be used to affect measurements, including the transmission ability of the transmitting medium (usually air) and the temperature of that transmitting medium. All these settings will affect the ultimate output for the temperature of the object being viewed. This functionality makes implementations of the thermal imaging camera **221** useful. Within some implementations of the technology, one or more averaging functions or algorithms are utilized in order to calculate temperatures of objects or subjects. Example averaging functions within the technology can be found in U.S. Patent No. 6,571,089 (see e.g., Col. 16, lines 60-62, and Col. 18, lines 10-31) and U.S. Patent No. 7,079,827 (see e.g., Col. 17, line 1-6). U.S. Patent No. 6,571,089 and U.S. Patent No. 7,079,827 are fully incorporated by reference herein. Temperature information can be displayed within bounded areas with numeric temperature indicators on a display **222.** It can be advantageous to display temperature information overlaid on top of standard image data relating to an object **300.**

Returning to the implementation shown in FIG. 3, temperature information is shown on a display **222** on an electronic device **302** as a layer **310** of an image **320** of an object **300.** The term layer comprises 'overlay.' Various temperatures of the object **300** are represented as Arabic numbers **315.** Note that the object **300** image data is not distorted, but rather is augmented with a temperature information or thermographic information.

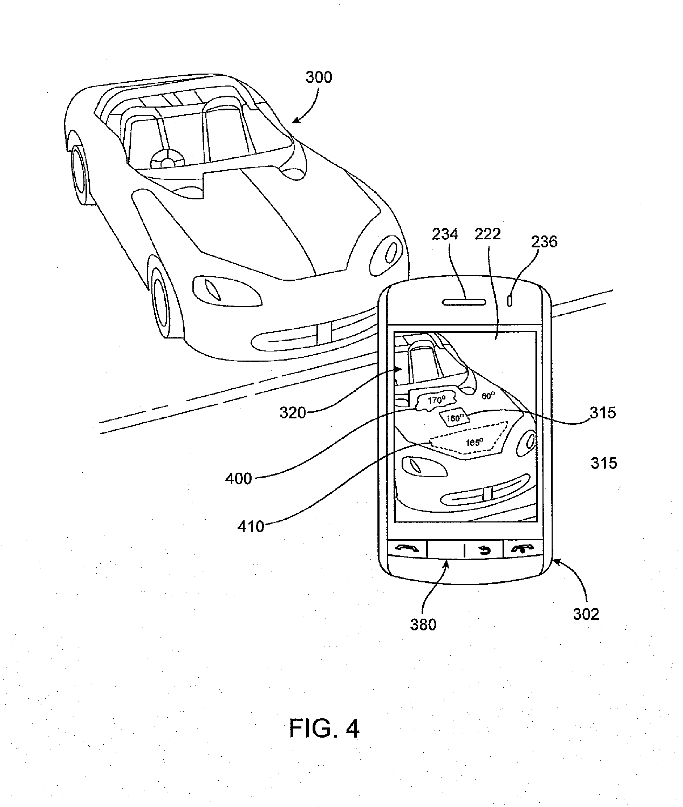

FIG. 4 illustrates an alternate style of depicting temperature information of an object **300** on a display **222.** The thermographic information or temperature information corresponding to the camera's object **320** is depicted within bounded temperature areas **400** and partially bounded temperature areas **410.** As was the case in FIG. 3, the object **300** image data is not distorted, but rather is augmented with temperature information.

FIG. 5 illustrates temperature information on a display **222** on an electronic device as a layer **310** of an image **320** of a camera subject **505.** Various temperatures of the object **300** are represented as Arabic numbers **315.**

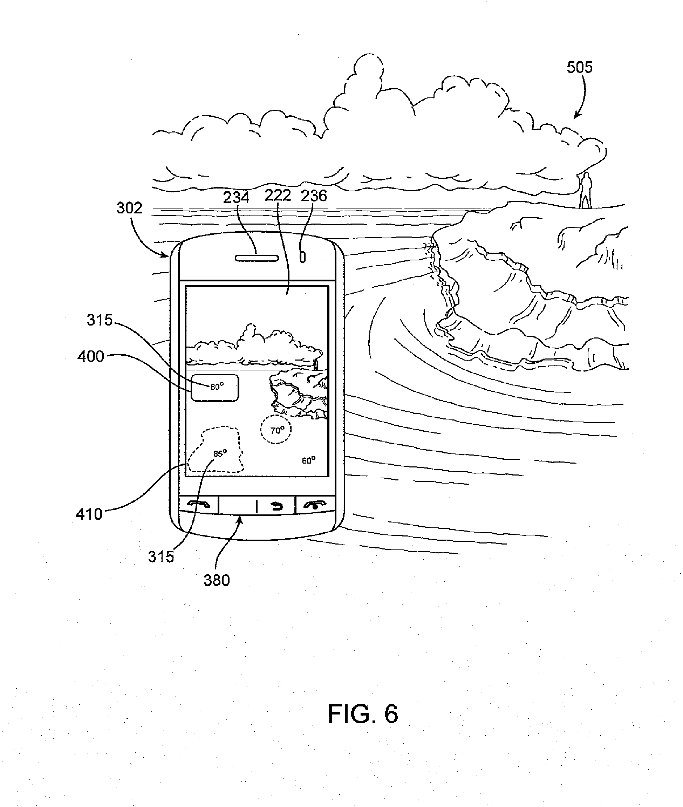

FIG. 6 illustrates an alternative display of temperature information relating to the same subject **505** as in FIG. 5, shown on a display **222** on an electronic device as a layer **310** on an image **320** of the subject **505.** Again, temperatures of the subject **505** can be indicated using Arabic numbers **315.**

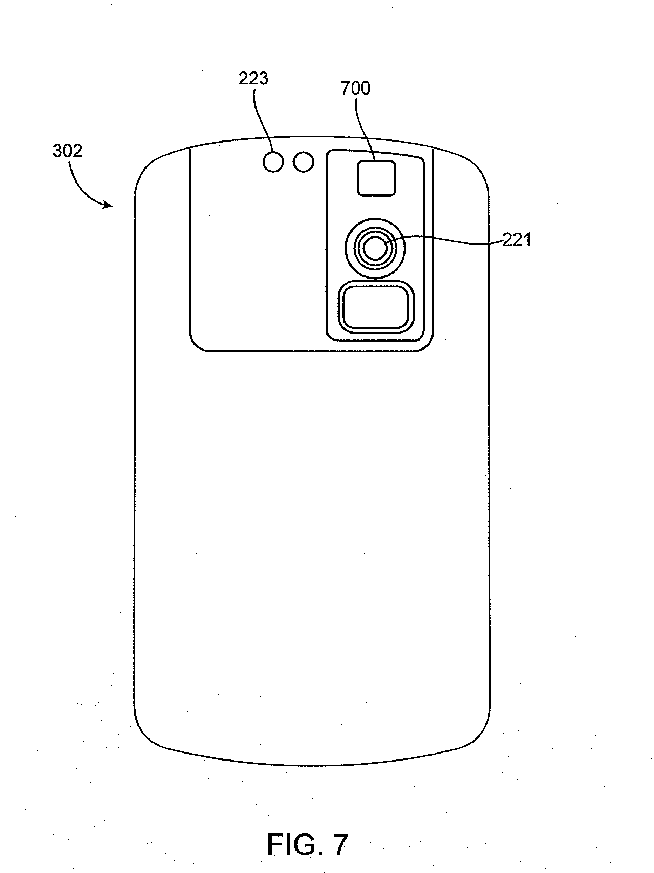

FIG. 7 illustrates a rear view of an electronic device **302** within the technology. In the implementation shown in FIG. 7, a camera **221** and one or more sensors **223** or detectors are shown housed within the device **302.**

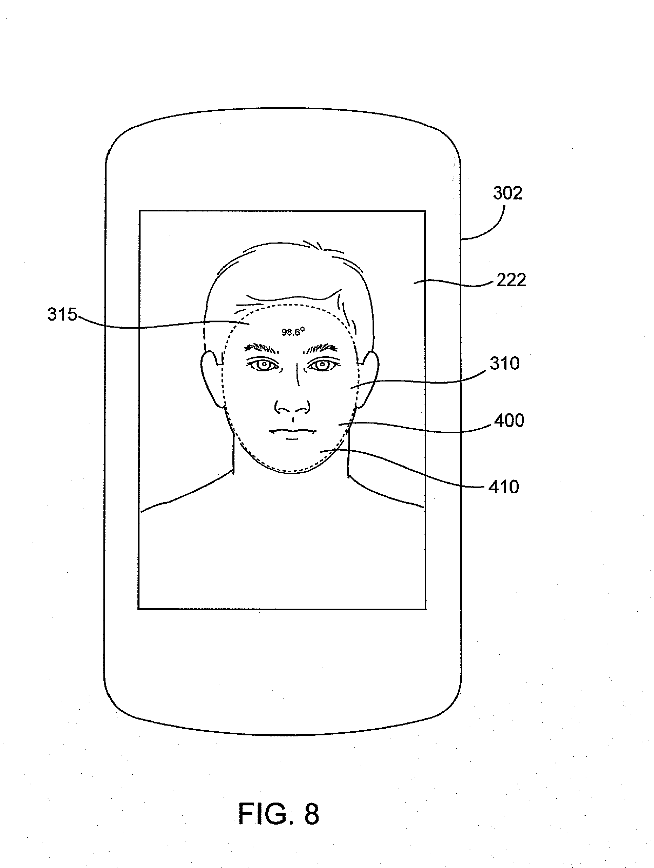

FIG. 8 illustrates a temperature information on a display **222** of a mobile communication device **302** wherein the object **300** is a person. The calculated temperature of the face area of the object **300** is depicted within a bounded area **400.** The boundary surrounding the face area is rendered in a broken line, thus the face area is a partially bounded area **410.** The calculated average temperature of the face area is depicted as a single number **315.** The calculated temperature corresponding to the object **300** can be calculated utilizing an averaging function.

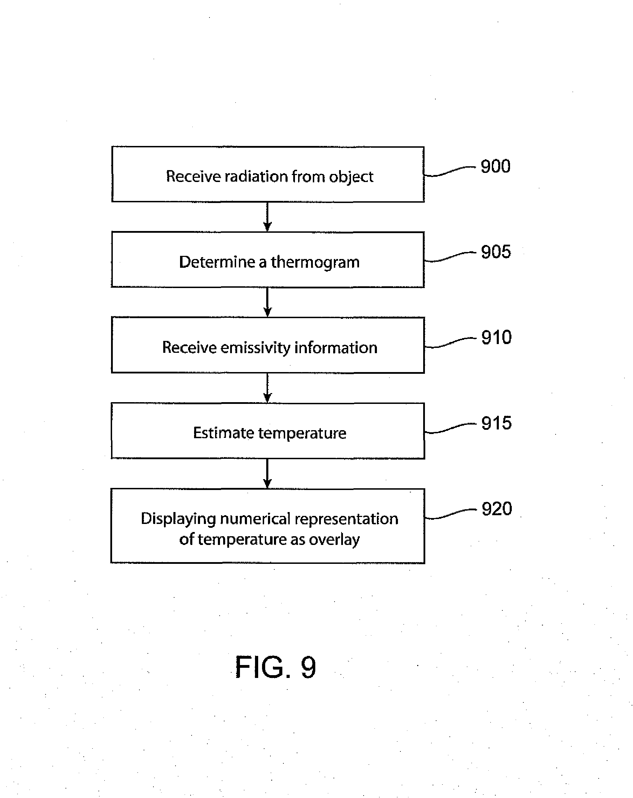

FIG. 9 illustrates the steps in a method for thermography in an electronic device. At **900,** Radiation in the infrared range is received from an object **900.** At **905,** a thermogram is determined from the received radiation. Information regarding emissivity of the object **300** is received **910.** At **915,** temperature is calculated as a function of received radiation, as a function of the thermogram, and as a function of the received information regarding emissivity of the object **300.** A numerical representation of the calculated temperature is displayed **920** as an overlay or layer on a visual depiction of the object **300.**

Implementations of the technology can be realized as including programming on an electronic device, e.g., **103.** In some implementations, programming for the technology is on the electronic device **103,** while data used by the electronic device **103** is on the wireless connector system **120** or a network server such as content server **134,** messaging server **132,** or application server **136.** In some implementations, programming for the technology can be realized on a remote server. Allocation of functionality among architectural elements can be a function of several factors including latency, processing resource availability and efficient usage, storage availability and efficient usage, and revenue opportunities.

Portions of the technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **302.** The medium can be an electronic, magnetic, optical, electromagnetic, infrared, or semiconductor system (or apparatus or device **302**) or a propagation medium (though propagation mediums as signal carriers per se are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray^{TM}. Both processors and program code for implementing each as aspect of the technology can be centralized or distributed (or a combination thereof).

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **302.** The medium can be an electronic, magnetic, optical, electromagnetic, infrared, or semiconductor system (or apparatus or device **302**) or a propagation medium (though propagation mediums as signal carriers per se are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof).

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A method for displaying temperature on a device, the method comprising:
receiving visual information from an object;
capturing radiation in the infrared range based on the object;
calculating temperature based on the captured radiation, and
displaying a numerical representation of the calculated temperature on a visual depiction of the object.

2. The method of claim 1, further comprising determining a thermogram based on the captured radiation and receiving information regarding emissivity of the object; and
wherein calculating temperature is accomplished utilizing an averaging function based the captured radiation, the thermogram, and the received information regarding emissivity of the object.

3. The method of claim 1 or 2, wherein displaying a numerical representation of the calculated temperature occurs in real time.

4. The method of claim 1, 2, or 3, wherein displaying a numerical representation of the calculated temperature on a visual depiction of the object further comprises:
displaying areas which are at least partially bounded and which are differentiated by color and which correspond to numbers.

5. The method of Claim 1, 2, 3, or 4, wherein capturing radiation in the infrared range based on the object comprises:
maintaining a datastore relating each of a plurality of material descriptions to the emissivity of the described material;
presenting a list of the material descriptions;
receiving input selecting a material description; and
assigning the emissivity related to the material description as the emissivity of the object.

6. A computer program product for displaying temperature on a device, the computer program product comprising:
at least one computer readable media, capable of storing and receiving instructions;
instructions stored on the media, that when executed by a processor are operative to:
receive radiation in the infrared range from an object;
determine a thermogram from the received radiation;
receive information regard emissivity of the object;
calculate temperature as a function of received radiation, as a function of the thermogram, and as a function of the received information regarding emissivity of the object, utilizing an averaging function, and
cause to be displayed a numerical representation of the calculated temperature as a layer on a visual display of the object.

7. The computer program product of claim 6, wherein display of the numerical representation of the calculated temperature as a layer on a visual display of the object occurs in real time.

8. The computer program product of claim 6, wherein instructions on the media, that when executed by a processor, are further operative to:
cause to be displayed a real-time numerical representation of the calculated temperature as at least one layer comprising at least one partially bounded area on a visual display of the object.

9. The computer program product of claim 6 or 8, wherein instructions on the media, that when executed by a processor, are further operative to:
display at least one real-time numerical representation of the calculated temperature as a layer comprising at least one fully bounded area on a visual display of the object.

10. The computer program product of claim 6, 7, or 8, wherein the media maintains a datastore relating each of a plurality of material descriptions to the emissivity of the described material and wherein the instructions on the media, when executed by a processor are further operative to:
present a list of the material descriptions;
receive input selecting a material description; and
assign the emissivity related to the material description as the emissivity of the object.

11. An electronic device, the device comprising:
a display;
processor resources;
at least one computer readable media, capable of receiving and storing information, in communication with the processor resources;
instructions on the media, that when executed by the processor resources are operative to:
receive radiation in the infrared range from an object;
determine a thermogram from the received radiation;
receive information regard emissivity of the object;
estimate temperature as a function of received radiation, as a function of the thermogram, and as a function of the received information regarding emissivity of the object, utilizing an averaging function, and
display a numerical representation of the calculated temperature as a layer on a visual display of the object.

12. The electronic device of claim 11, wherein the radiation comprises one of near infrared radiation, short-wave infrared radiation and mid-wave infrared radiation.

13. The electronic device of claim 11, wherein the radiation comprises one of long-wave infrared radiation and very long-wave infrared radiation.

14. The electronic device of claim 11, 12, or 13, wherein the instructions on the media, that when executed by the processor resources, are further operative to:
cause to be displayed a real-time numerical representation of the calculated temperature as a layer on a visual display of the object comprising at least one bounded area.

15. The electronic device of claim 11, 12, 13, or 14, wherein the instructions on the media, that when executed by the processor resources, are further operative to:
cause to be displayed a real-time numerical representation of the calculated temperature as a layer on a visual display of the object comprising at least one bounded area which is differentiated by color.

## Amended claims

### Amended claims in accordance with Rule 137(2) EPC.

**1.** A method for displaying temperature on a device, the method comprising:
receiving visual information from an object;
capturing radiation in the infrared range based on the object (900);
calculating temperature based on the captured radiation (915), and
displaying a numerical representation of the calculated average temperature within bounded areas (400, 410) depicted on a visual depiction of the object (920).

**2.** The method of claim 1, further comprising determining a thermogram based on the captured radiation (905) and receiving information regarding emissivity of the object (910); and
wherein calculating temperature is accomplished utilizing an averaging function based the captured radiation, the thermogram, and the received information regarding emissivity of the object.

**3.** The method of claim 1 or 2, wherein displaying a numerical representation of the calculated temperature occurs in real time.

**4.** The method of claim 1, 2, or 3, wherein the bounded are differentiated by color.

**5.** The method of Claim 2, wherein capturing radiation in the infrared range based on the object comprises:
maintaining a datastore relating each of a plurality of material descriptions to the emissivity of the described material;
presenting a list of the material descriptions;
receiving input selecting a material description; and
assigning the emissivity related to the material description as the emissivity of the object.

**6.** A computer program product for displaying temperature on a device, the computer program product comprising:
at least one computer readable media, capable of storing and receiving instructions;
instructions stored on the media, that when executed by a processor are operative to:
receive radiation in the infrared range from an object (900);
determine a thermogram from the received radiation (905);
receive information regard emissivity of the object (910);
calculate temperature (915) as a function of received radiation, as a function of the thermogram, and as a function of the received information regarding emissivity of the object, utilizing an averaging function, and
cause to be displayed a numerical representation of the calculated temperature within bounded area depicted, as a layer, on a visual depiction of the object (920).

**7.** The computer program product of claim 6, wherein display of the numerical representation of the calculated temperature as a layer on a visual display of the object occurs in real time.

**8.** The computer program product of claim 6, wherein the numerical representation is displayed in real-time.

**9.** The computer program product of claim 6 or 8, wherein the bounded area is depicted on the visual depiction of the object as a solid or broken line.

**10.** The computer program product of claim 6, 7, or 8, wherein the media maintains a datastore relating each of a plurality of material descriptions to the emissivity of the described material and wherein the instructions on the media, when executed by a processor are further operative to:
present a list of the material descriptions;
receive input selecting a material description; and
assign the emissivity related to the material description as the emissivity of the object.

**11.** An electronic device, the device comprising:
a display;
processor resources;
at least one computer readable media, capable of receiving and storing information, in communication with the processor resources;
instructions on the media, that when executed by the processor resources are operative to:
receive radiation in the infrared range from an object (900);
determine a thermogram from the received radiation (905);
receive information regard emissivity of the object (910);
estimate temperature as a function of received radiation, as a function of the thermogram, and as a function of the received information regarding emissivity of the object, utilizing an averaging function (915), and
display a numerical representation of the calculated average temperature within bounded areas depicted, as a layer, on a visual display of the object (920).

**12.** The electronic device of claim 11, wherein the radiation comprises one of near infrared radiation, short-wave infrared radiation and mid-wave infrared radiation.

**13.** The electronic device of claim 11, wherein the radiation comprises one of long-wave infrared radiation and very long-wave infrared radiation.

**14.** The electronic device of claim 11, 12, or 13, wherein the numerical representation displayed in real-time.

**15.** The electronic device of claim 11, 12, 13, or 14, wherein the bounded areas are differentiated by color.
